# EUROPEAN PATENT APPLICATION

(11) **EP 1 153 853 A2**
(43) Date of publication of application: **14.11.2001**
(21) Application number: 01109436.4
(22) Date of filing: 23.04.2001
(51) Int. Cl.: B65D 85/672

(54) **Paper tube with flange**

(30) Priority: 01.05.2000 JP 2000132129
(71) Applicant: Tanaka Shikan Co., Ltd., Yao-shi, Osaka (JP)
(72) Inventor: Tanaka, Norio, Yao-shi, Osaka (JP)
(74) Representative: Patentanwälte Hauck, Graalfs, Wehnert, Döring, Siemons

(57) **Abstract**

A paper tube with a flange which comprises a winding trunk outer tube 1, a flange 2 having radial cuts 3 extending radially from the central part, and a pressing inner tube 5 for mounting the flanges 2 at the ends of the winding trunk outer tube 1, these components all being made of paper, so that the pressing inner tubes 5 are inserted, through the radial cuts 3 of the flanges, into the winding trunk outer tube 1 to be tight-fitted therewith via a folding part 3a defined by the radial cuts 3, and the folding parts 3a are fixed between the outer tube 1 and inner tubes 5.

## Description

### BACKGROUND OF THE INVENTION

### Field of the invention

The present invention relates to a paper tube with a flange or a projecting edge for winding around the paper tube a thin sheet material, such as paper, web and film, or a wire material, such as yarn, thread, strings, cords, tapes, hoses, electric wires, wires and chains.

### Prior Art

Bobbins, which are used for winding around the same the foregoing thin sheet materials or the wire material, are conventionally mainly made of synthetic resin or wood. The bobbin comprises a winding trunk and a "flange" integrally mounted at both ends of the winding trunk, so that any object to be wound can be wound around or on the outer peripheral surface of the winding trunk and the flanges protect the lateral edges of the wound object and arrange the same along the flanges.

The bobbins made of synthetic resin have such advantages as being suitable for mass production thanks to provision by molding, having fine appearances and being light enough to be readily usable, while they have a problem of environmental pollution of local areas around the incineration site arising out of the facts that the bobbins, after use, are discharged as industrial waste and burned and exhaust gases from incinerators contain toxic substances. There is another particular problem that the bobbins made of synthetic resin, which are desired to be recycled for use, are not recycled due to various undesirable social problems related to disposal of wastes these days.

The bobbins made of wood are heavy to be inconvenient in use and require much trouble and time for removing metal, such as a lot of nails applied, from the body before burning the wooden bobbins for disposal, irrespective of such convenience of being burned disposed when they become unnecessary. There is another problem that the bobbins made of wood are not suitable for practical use in view of exhaustion of wooden material or resources, a rise in price of wood and protection of the environment of the globe.

### SUMMARY OF THE INVENTION

The present invention has been designed to overcome the foregoing problems. An object of the present invention is to provide a paper tube with a flange which is readily assembled and valuable since all members constituting the paper tube are made of paper and reusable as recycled paper when become unnecessary, thereby enabling protection of resources.

### DETAILED DESCRIPTION OF THE INVENTION

The present invention developed as a means for achieving the foregoing object adopts and relates to a paper tube with a flange or a projecting edge which paper tube comprises a winding trunk outer tube, a flange member having cuts extending radially from the center, and a pressing or tight-fitting inner tube for mounting the flanges at the ends of the winding trunk outer tube, and all the outer and inner tubes and flanges being made of paper, so that the pressing or tight-fitting inner tubes are inserted into the winding trunk outer tube through the radial cuts on the flange members to be tight-fit with the winding trunk outer tube via folding parts formed by the radial cuts, the folding parts being made firm between the outer tube and inner tube.

The present invention does further relate to a paper tube with a flange constructed as above wherein an adhesive is applied to both of inner and outer sides of the folded parts, or, the winding trunk outer tube is provided with a retaining hole for an initial end of the object to be wound.

### BRIEF DESCRIPTION OF THE DRAWINGS

Fig. 1 is an exploded perspective view showing an example of a paper tube with a flange according to the present invention.
Fig. 2 is a longitudinal sectional view showing another example of a paper tube with a flange according to the present invention.
Fig. 3 is a longitudinal sectional view showing a further example of a paper tube with a flange using an elongate pressing or tight-fitting inner tube.

### PREFERRED EMBODIMENTS OF THE INVENTION

### Examples

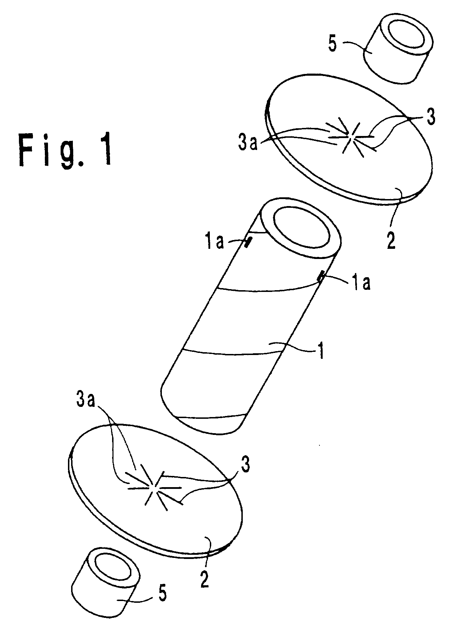

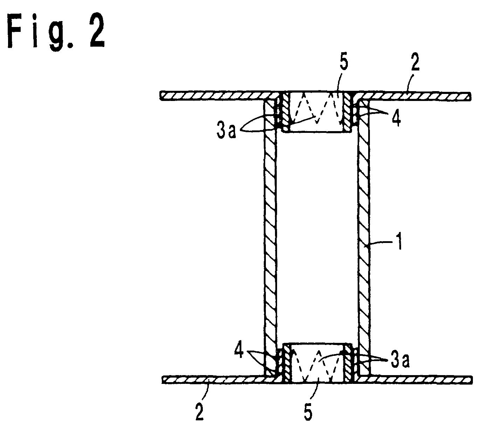

Embodiments of the present invention will be detailed hereunder with referring to Figs. 1 and 2 as attached. A paper tube with a flange according to the present invention comprises a winding trunk outer tube 1 in a cylindrical shape, two flanges 2 in a disc-like shape and having cuts 3 extending radially from the central part, and two inner tubes 5 for pressing or tight-fitting in order to mount the flanges 2 onto the ends of the winding trunk outer tube 1, and all of these components being made of paper.

The winding trunk outer tube 1 consists of a cylindrical spiral-paper tube made of a strip of basic paper spiraled in multi-layers and adhered. The outer tube 1 has at a proper position a retaining bore la for an initial end of the object to be wound. Shapes of the retaining bore 1a may vary depending upon kinds of the objects to be wound.

The flange 2 is made of pasteboard or corrugated board having strength and thickness fully enough to bear rolling and may use a plurality of paperboard laminate sheets overlapped and adhered to one another or a plurality of corrugated board sheets overlapped and adhered to one another, the paperboard laminate sheets or the corrugated board sheets being punched into a round shape.

The flange 2 has radial cuts 3 extending radially from the central part and defining folding parts 3a between the cuts 3. Eight holding parts 3a are provided in this example.

The folding parts 3a are sized as a whole to almost correspond to a circle having a diameter equal to the inner diameter of the winding trunk outer tube 1, the circle being divided into eight by the cuts 3. The folding parts 3a are not necessarily limited in number to eight and do, non-preferably, become poor in fixing or interlocking effect with less than eight folding parts 3a, while achieve sufficient fixing effect with more than eight folding parts 3a.

The folding parts 3a may be preferably applied, on the inner and outer sides, with an adhesive 4 as described later. The adhesive 4 may preferably employ those made of natural material, (exclusive of synthetic resin), particularly, a water-soluble (liquid or aqueous solution) adhesive made of starch, glue, gelatin, or the like since such adhesive is readily dissolved in water when the folding parts are recycled as recycled paper, thereby facilitating the recycling process.

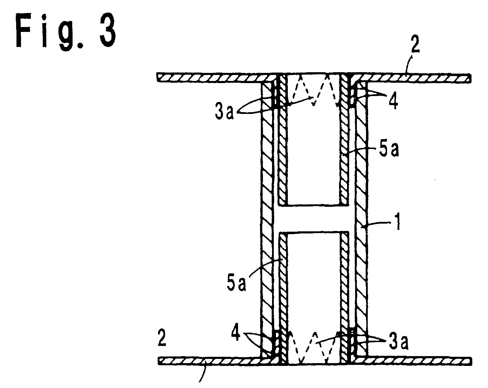

Reference number 5 designates a pressing or tight-fitting inner tube made of a short paper tube to be fit into the winding trunk outer tube 1. The pressing inner tube 5 is inserted through the radial cuts 3 into the outer tube 5 to be tight-fitted on the inner surface of the winding trunk outer tube 1 by means of the folding parts 3a. The pressing inner tube 5 may be an elongate tube 5a as shown in Fig. 3 (other than the short tube shown in Fig. 2) terminating almost at an intermediate part of the outer tube 1. The elongate inner tube 5a allows a mandrel to be readily inserted into the inner tube and is not likely to fall off from the outer tube.

Assembling the paper tube with the flange is as follows. The folding parts 3a is previously folded slightly inwards, and the flanges 2 are placed at the ends of the winding trunk outer tube 1 with the folding parts 3a being fit into the hollow inside in the outer tube 1. The pressing inner tubes 5 are inserted from the ends of the outer tube 1 to cause the folding parts 3a to be gradually folded to a right angle when the inner tubes 5 are completely fit in the outer tube 1, so that the folding parts 3a become tightly fixed between the inner peripheral surface of the winding trunk outer tube 1 and the outer peripheral surface of the pressing inner tubes 5, thereby finishing the assembling. In this case, the adhesive 4 when applied on both of inner and outer sides of the folding parts 3a enables the folding parts 3a to be further strongly fixed on the inner and outer peripheral surfaces of the outer and inner tubes 1 and 5 respectively.

Function of the paper tube with a flange constructed as above is as follows. Since all of the members constituting the paper tube with a flange according to the present invention are made of paper, the paper tubes when become unnecessary can be recycled for re-use as recycled paper. Moreover, the folding parts 3a are pressed strongly by elastic restoring force inherent in paper and on the basis of tight-fitting between the pressing inner tube 5 and winding trunk outer tube 1 so as to be integrally and firmly fixed.

Fixing the flanges 2 in the above examples are performed merely by inserting the inner tubes 5 into the outer tube 1, and otherwise additionally applying other fixing means, such as, using a stapler, nailing or applying wooden screws at a thicker part of the winding trunk outer tube. Besides, the pressing inner tube 5 may employ a single elongate paper tube. That is, the present invention should not be limited to those examples but may be naturally modified in design variously within a scope in which the object of the invention can be achieved and the gist of the invention is not lost.

### EFFECT OF THE INVENTION

As seen from the above, the present invention relates to a paper tube with a flange which comprises the winding trunk outer tube, the flanges having radial cuts extending radially from the center, and the pressing inner tubes for mounting the flanges at the ends of the winding trunk outer tube, these components all being made of paper, so that the pressing inner tubes are inserted, through the radial cuts of the flanges, into the winding trunk outer tube to be tight-fitted therewith via the folding parts defined by the radial cuts, and the folding parts are firmly fixed between the outer tube and the inner tubes. The present invention has the following excellent advantages.

Since the winding trunk outer tube, flanges and pressing inner tubes are all made of paper, they are light in weight, thereby enabling handling the paper tube upon winding and unwinding operation to be carried out readily and conveniently. Further, merely fitting the pressing inner tubes into the hollow inside of the winding trunk outer tube provides simple assembling of the flanges, thereby making the invention simple in construction and cheap to produce.

When the invention becomes unnecessary after use, they are material that can be reused as a recycled paper, contributing to protection of wooden resources and environment of the globe. In case that the material of the present invention is to be burnt, they (all made of paper) can be conveniently subjected to burning without necessity of discrimination of material.

Upon assembling the paper tube, the pressing inner tubes and the winding trunk outer tube are tight-fitted through the folding parts of the flanges, so that they are strongly pressed and integrally fixed by elastic restoring force inherent in paper.

Furthermore, an adhesive when applied on both of inner and outer sides of the folding parts makes higher the fixing effect, providing a rigid and strong paper tube with a flange.

The winding trunk outer tube has a retaining bore for an initial end of the object to be wound, enabling ensure winding operation and long repeated use without damaging the winding trunk.

## Claims

1. A paper tube with a flange which comprises a winding trunk outer tube, a flange having radial cuts extending radially from the central part, and a pressing inner tube for mounting the flanges at the ends of the winding trunk outer tube, these components all being made of paper, so that the pressing inner tubes are inserted, through the radial cuts of the flanges, into the winding trunk outer tube to be tight-fitted therewith via a folding part defined by the radial cuts, and the folding parts are fixed between the outer tube and inner tubes.

2. A paper tube with a flange as set forth in Claim 1 wherein an adhesive is applied to both of inner and outer sides of the folding parts.

3. A paper tube with a flange as set forth in Claim 1 wherein the winding trunk outer tube has a retaining bore for an initial end of the object to be wound.
